# EUROPEAN PATENT APPLICATION

(11) **EP 0 664 526 A2**
(43) Date of publication of application: **26.07.1995**
(21) Application number: 94203760.7
(22) Date of filing: 24.12.1994
(51) Int. Cl.: G06T 17/40, G06T 15/70, G06T 7/00, G01B 5/207, G01B 7/287

(54) **Method and apparatus for three-dimensional personalized video games using 3-D models and depth measuring apparatus**

(30) Priority: 19.01.1994 US 183540
(71) Applicant: EASTMAN KODAK COMPANY, Rochester, New York 14650-2201 (US)
(72) Inventor: Ellson, Richard N., c/o Eastman Kodak Company, Rochester, New York 14650-2201 (US); Parulski, Kenneth A., c/o Eastman Kodak Company, Rochester, New York 14650-2201 (US); Baumeister, Hans Peter, c/o Eastman Kodak Company, Rochester, New York 14650-2201 (US)
(74) Representative: Wagner, Karl H., Dipl.-Ing.

(57) **Abstract**

In one preferred embodiment of the invention there is provided a digital recording media having recorded thereon a standard segment of data created from graphics and control information, a personalized segment including one or more images, and one or more associated files containing depth (distance) information. Accessing and playing of the media stored data results in personalized data such as a 3-D image of the person playing the game to appear as a character on a display screen. A method embodiment of the invention provides a method for producing a displacement image representing the depth of an object and comprises the steps of:
a) establishing a plurality of displacement signals representing the surface of an object; and
b) producing a displacement image of the surface of the object by combining said displacement signals.

## Description

### Cross-Reference To Related Applications

The subject matter of the present Application is related to the following:
U.S. Patent Application Serial No. 943,630, entitled "Method And Apparatus For Storing Generalized Image Data", bearing Kodak Docket 66,012, filed on September 11, 1992.

U.S. Patent Application Serial No. 175,806, entitled " Method And Apparatus for Producing 'Personalized' Video Games Using CD Discs", bearing Kodak Docket No. 69,052, filed on December 30, 1993.

U.S. Patent Application Serial No. 175,813, entitled "Method And Apparatus for Standardizing Facial Images For Personalized Video Entertainment", bearing Kodak Docket No. 69,361, filed on December 30, 1993.

### Field of Invention

The present invention is related to the field of digital image processing and more particularly to a method for creating interactive digital motion images. Even more specifically, the particular method produces and uses three-dimensional models of people and objects for video game applications.

### Background Of The Invention

There is a desire to personalize many consumer items. For example, monograms have long been a popular means of personalization for china, shirts and luggage. The use of the image of an individual can add much appeal to an object, and images now personalize many everyday items such as coffee mugs, T-shirts and credit cards.

Another commonplace product ripe for personalization via imaging is the interactive video entertainment market. This has become a large industry with game consoles in over 60% of U.S. households. To date, users of video entertainment have often been limited in their ability to personalize their interactive video entertainment to the selection of the name of their persona in the system and perhaps a selection of their appearance from a short predefined list.

The graphics and animation capability of many interactive video systems has steadily improved. These systems are increasingly capable of manipulating image data bases and graphical object rendering. Most current interactive video entertainment "games" are stored on cartridges, with 102 million sold in 1992 alone. The demand for better graphics is pushing the industry to larger data volumes for each game unit, and the distribution vehicle of some game units has become the Compact Disc ROM (CD-ROM), having hundreds of megabytes of capacity. Sega, a major player in the interactive video entertainment market with annual sales over $2 billion, expects to sell a million CD-ROM based games in 1993.

With the increased storage capacity of the game distribution vehicle, the potential for distributing personalized image data in conjunction with the game is possible. Image data such as a portrait image could be captured by digital imaging devices such as an electronic still camera like the Professional DCS 200 Digital Camera System from Eastman Kodak of Rochester, New York, or the CCD 4000 RGB Flash-Sync Cameras also from Kodak. These images could then be written to the CD-ROM by a CD-ROM writer such as the Kodak Photo CD 2X Writer using the process described by the cross-referenced application by Parulski, Baumeister and Ellson, entitled "Method And Apparatus For Producing 'Personalized' Video Games Using CD Discs".

A greater personalization can be achieved by including 3-D information into the portrait image. The 3-D information can be collected by utilizing the Cyberware 3030 Color 3D Digitizer available from Cyberware Lab. of Monterey California. This information can be stored in conjunction with the color image information in a multi-resolution format as described in the cross-referenced U.S. Patent Application Serial No. 943,630, entitled "Method And Apparatus For Storing Generalized Image Data", bearing Kodak Docket 66,012, filed on September 11, 1992.

Once portrait image information is made available to the interactive video entertainment system, it will be used to create animation of the personalized characters or of hybrid characters which mix the features of personalized portraits and those provided by the system as "authored" portraits. This is accomplished through the application of image warping and metamorphosis techniques, more commonly known as "morphing". Morphing requires knowledge of the correspondence of feature points in a starting image with feature points in an ending image in order to calculate smooth interpolations of the intermediate images. These techniques were used by Pacific Data Images of Sunnyvale, California, to generate the special effects in the Michael Jackson music video, "Black or White" (see T. Beier and S. Neely, "Feature-Based Image Metamorphosis", Computer Graphics, Vol. 26, No. 2, July, 1992, pp. 35-42). Software tools for digital image metamorphosis are available from many companies including A-Morph from KOZMO, Ltd. of Budapest and MORPH 1.0 from Gryphon Software Corp. of San Diego, California. The morphing technology can generate a fictional face by blending the face of one person with another person's image by stopping in between the two endpoint digital images. For example, a child's image could be hybridized with the face of their best friend or with one of the faces provided on the CD-ROM.

Human-driven, computer-generated character animation enables human actors to generate animation sequences of cartoon characters. This technique has been used on the Super Mario Brothers cartoon program. It operates by tracking feature points on a human actor by three-dimensional position sensor transmitter/receiver system such as The Bird from Ascension Technology Corp., of Burlington, Vermont. The real-time motion of the feature points in three-dimensional space are recorded over time for a given behavior such as a laughing or yawning by the human actor. The motion of the feature points are used to drive a feature based metamorphosis of the cartoon character's model.

The present invention addresses the need for more personalization of interactive video entertainment by describing a system for capturing, previewing, feature identifying, standardizing and storing of portrait-type images and associated 3-D type data on a storage media suitable for use as an input means for interactive video entertainment. The present invention provides the advantages of enabling a customer to select and write images and 3-D data onto a storage media which can be accessed by interactive video entertainment software. Further, this format will provide information to the interactive video software suitable for character animation of the person's face depicted in the image or a hybridization of the individual's facial image with another facial image.

If "personalized" video games could utilize three-dimensional models of the users, which are associated with pictures of the users, the video game could be made much more realistic and enjoyable. What is needed is a method and apparatus for easily and economically creating such "personalized" video games which include 3-D models of the users.

### Summary Of The Invention

In one preferred embodiment of the invention there is provided a digital recording media having recorded thereon a standard segment of data created from graphics and control information, a personalized segment including one or more images, and one or more associated files containing depth (distance) information.

In a method embodiment of the invention there is provided a method for producing a displacement image representing the depth of an object comprising the steps of:
a) establishing a plurality of displacement signals representing the surface of an object;
b) producing a displacement image of the surface of the object by combining said displacement signals.

From the foregoing it can be seen that it is a primary object of the present invention to provide a personalized 3-D image particularly adapted for use as part of a video game.

Another object of the present invention is the formation of a depth determination device.

It is yet another object of the present invention to provide a stored 3-D image that can be animated in a video game.

Another object of the present invention is the provision of a technique for producing 3-D video game characters from the combination of personalized data and authored data.

The above and other objects of the present invention will become more apparent when taken in conjunction with the following description and drawings wherein like characters indicate like parts and which drawings form a part of the present invention.

### Brief Description Of The Drawings

Figure 1 is a block diagram of a system for creating personalized video games including 3-D models.

Figures 2A to 2D illustrate a novel method for creating a depth map using a depth-to-reflectance conversion mechanism incorporating a two-dimensional array of probes.

Figure 3 pictorially illustrates the arrangement of a personalized information file on a writable CD video game disc.

Figure 4 illustrates an image, displayed from a 3-D personalized video game as played on a video game player.

### Detailed Description Of The Invention

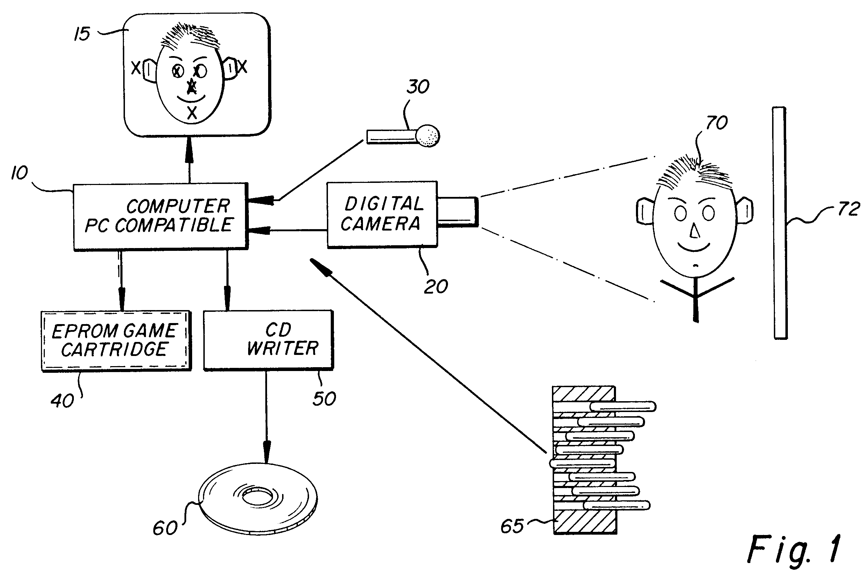

Referring to Figure 1, the technique of the present invention is implemented using a computer 10 for receiving digital images from an image generation device such as a digital camera 20, image scanning device, digital image data base and/or a Photo CD disc (not shown). The computer 10 may also incorporate audio that is inputted to the system by way of a microphone 30 or other audio generation or storage device. The computer 10 is adapted to the play of video games and therefore is implemented with at least one reader for reading in game software. In the arrangement shown, an insertable cartridge 40 is the vehicle for importing the software to the computer. Additionally, the computer is connected to a CD writer 50 to provide the capability of forming a 3-D personalized CD video game disc 60 that is playable on the users personal computer.

With the arrangement shown for producing "personalized" interactive entertainment, a video game customer 70 is photographed against a blue background 72 so as to form a digital image that permits the portrait data to be easily removed from the background data. This allows the bits representing only the cut-out of the customer to be filtered out for further use. Once the portrait data is cut-out it can be used as a main character in a video game. To determine the views that are needed for a particular video game the customer goes to a store which creates the personalized video game disc, and chooses what type of game they would like to purchase. Dependent on the game chosen a master index is provided to the photographer, identifying the type of poses necessary to supply each of the character's frames with the appropriate view (pose). In addition to the digital portrait data, a 3-D data model of the person's face and/or body is created by taking a depth image, from for example, a depth determining system 65 and/or by identifying key features of the face, such as the location of eyes, chin, etc.

Brief audio segments (from scripts for the particular game) and text (such as the player's names, birthdays, etc.) may also be recorded, along with background images (such as favorite location photos or photos of the town where the store is located), which could be provided by Photo CD discs containing scanned images. The personalized images and audio segments are automatically integrated into the game software that is read form the game cartridge 40 and recorded onto the writable CD 60 or stored on another EPROM memory game cartridge.

Alternately, the personalization information could be created in a standard form, and many different video games could be designed to use the same personalization data. In this case, the personalization data would be stored on a CD or EPROM cartridge separate from the game software, and the video game player would need to be able to access both the personalization data and the game software data in order to play a personalized video game.

The store operator (photographer) takes one or more photographs of the customer, and possibly the customer's friends. The operator may also enter their names and other information which might be relevant to the game (for example, for an auto race game, their favorite car models and colors). The customer's voice may also be recorded saying a few key audio segments (like "I'm a winner!" for an auto race game).

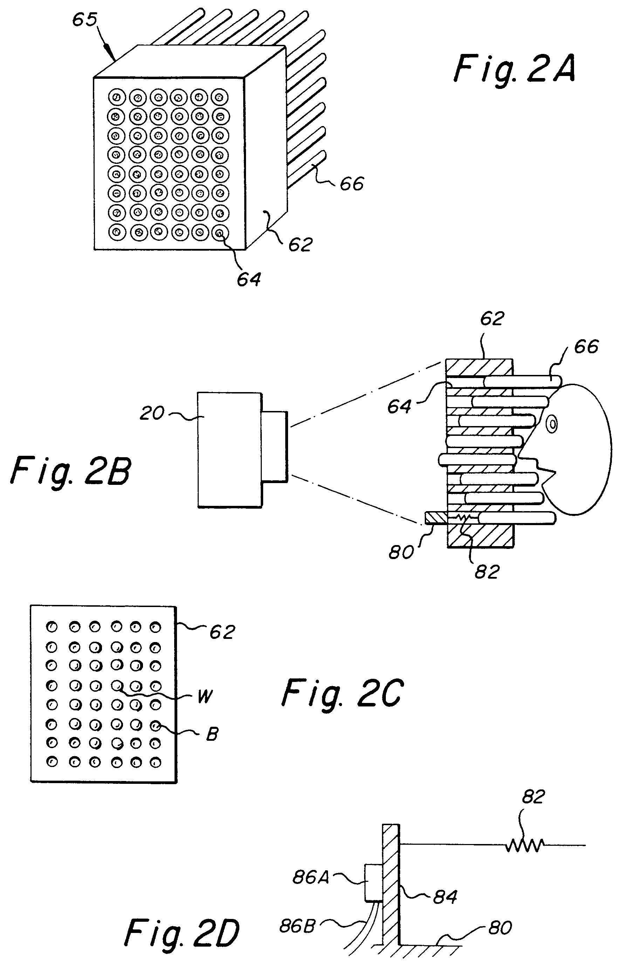

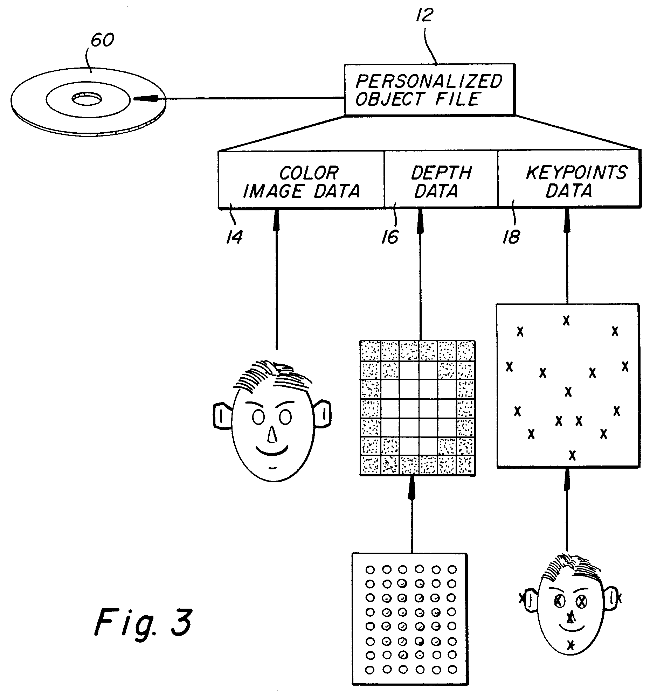

Alternately, these images could be recorded on photographic film which could later be scanned to create the digital personalization information. The electronic photos are processed (to extract the head view and delete the blue background) and converted to a format which can be used by the game software. For example, the customer's face may be stored as a graphics file which can be used as the head of a race car driver, or "morphed" into an alien or animal form, at the appropriate point as the game is played. A depth determination system is also used to provide depth information, as will be described relative to Figures 2A through 2D. A number of key points in the image (locations of eyes, nose, chin, etc) are identified by the operator. The color image data, depth data, and key points are recorded, as will be described relative to Figure. 3.

The depth data can be measured using commercially available systems such as the Cyberware 3030 Color 3D Digitizer which use a laser beam as a line scanning light source and image digitizing to determine the color and depth at any point.

Alternately, Figures 2A through 2D show a novel depth-to-reflectance converter 65. The device is a block of black material 62, with a two-dimensional array of black holes 64 cut there through. A plurality of white pegs 66, corresponding in number to the number of black holes 64, are inserted into each black hole 64. The white pegs 66 are, for example, white cylinders with tapered ends. To measure the "depth" of a person or object, the person or object contacts the pegs thereby moving the pegs into their respective holes. The opposite side of the converter is captured with an image capture device 20 which could either electronic or film based. For parts of the object which are far away, the pegs are deep in the black substrate, and the black edge walls of the substrate reflect little light. Therefore, the reflectance of this area is low towards black (denoted B in Figure 2C). For near objects, the pegs are pressed farther into the substrate, so that the white pegs are closer to the photographed side of the converter. This increases the reflectance, making this area whiter (denoted as W in Figure 2C). A typical array would have many more pegs than shown in Figures 2A through 2C. To visualize the device more clearly think of a contour replicator of the type used by wood workers which is formed of a large number of wire segments held next to each other to form a plain of wires. One end of the wires is pressed against the contour effectively duplicating the contour. The contour is then transferable as a pattern to another object that is to be cut to fit with the original item. In the present instance the device is a two-dimensional array of these wires with the end not touching the contour being within a darkened hole. In Figure 2B a depth generator 80 is shown connected to a peg 66 by means of a connector spring 82. Figure 2D illustrates this arrangement in an enlarged view. The connector is connected at its opposite end to a flexible cantilevered member 84. A strain gauge 86A is affixed to the flexible member 84 and by its leads 86B to a read out device (not shown) that converts the mechanical deflection of flexible member 84 to corresponding electrical signals that are a function of the displacement of the pegs 66 and in turn represent the depth of the object at that point. The electrical signals can be stored as is or converted to digital values that stored. In the digital imaging art each peg associated depth value would be called a pixel value. Although not shown for purposes of clarity, each of the pegs 66 may be provided with a depth signal generator 80. The pixel values of the photographed depth to reflection converter are correctable via a calibration curve, since the reflectance may be a non-linear function of depth, and depend on the shape of the end of the pegs and the size of the spacing between holes.

This calibration curve of reflectance measured by the image capture device and the depth determined by the pins can be found in many ways. The preferred method is to construct a calibration object consisting of an object whose depths at each pin location are known for a given orientation. The calibration object is then used to make an image of the reflectances of the pins to match to the known depths to form a calibration.

Referring to Figure 3 which illustrates a personalized 3-D object file 12 representative of each personalization object. The file 12 includes color image data 14, for example, the Photo CD Image Pac hierarchical format, as described in "A Planning Guide For Developers", Kodak Photo CD System, May, 1991. Depth data 16 which may be derived from the depth determination system 65. The depth data may be stored at a lower resolution, for example 1/16 of the resolution used for the color image data. Another alternate embodiment stores the depth and image data in linked multi-resolution structures as described by the cross-referenced Patent Application U.S. Serial No. 943,630. The personalized 3-D object file also contains keypoints data 18, representing key x,y positions of the image. The points are indicated by the X's in Figure 3, and correspond to important locations of the image. For the face example, they might include the locations of the centers of the eyes, end of the mouth, chin, ears, hairline, etc. The X positions would typically be manually adjusted by the operator using a computer-generated template.

The use of a standard template for many different personalization images is a feature of this invention. The initial template is indicated by the computer as a group of overlays ( X's) on top of the face image, as shown in Figure. 3. The operator adjusts the locations of the X's to correspond to the proper locations ( scaling and rotation) of the eyes, nose, etc. Other enablements of the locating of feature points are described in the cross-referenced Patent Application bearing Kodak Docket No 69,361. The locations of the features are then stored as "key points data". The "key points data" file may also include the depth of these features. The key-points data can be identified through the same location process as described for the image data to establish a points data file for the depth data. There may be a number of different initial templates for different types of people, for example females/males, people with glasses, beards, etc.

Yet another technique for storing the image and depth data is to process the information into polygons with vertices described as three-dimensional coordinates and color texture map coordinates. The process for converting depth and image data into polygonal form is well understood by those versed in the art and is described by Polis and McKeown, "Iterative TIN Generation from Digital Elevation Models," Proc. of Conference on Computer Vision and Pattern Recognition, pp. 787-790, June 1992 and Schroeder, et. al., "Decimation of Triangular Meshes," Computer Graphics, Vol 26, No 2, pp. 65-70, July 1992.

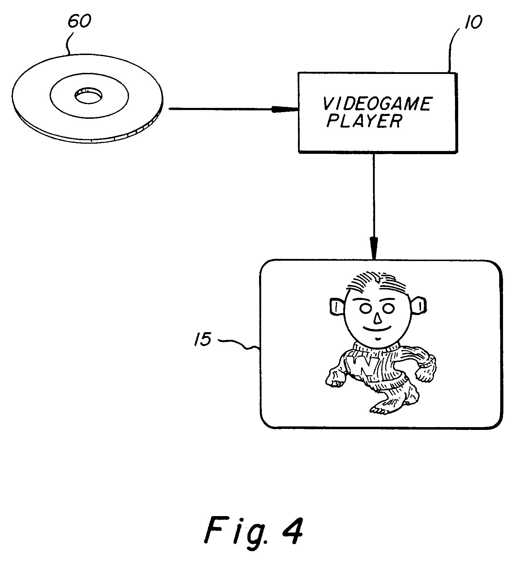

In Figure 4 a personalized CD video game disc 60 is inserted in the video game player 10. The home video game player 10 reads and uses the personalized 3-D object file of Figure 3, recorded on the disc 60, to create a personalized video game caricature, as shown on the display screen 15.

While there has been shown what are considered to be the preferred embodiments of the invention, it will be manifest that many changes and modifications may be made therein without departing from the essential spirit of the invention. It is intended, therefore, in the annexed claims, to cover all such changes and modifications as may fall within the true scope of the invention.

### Parts List:

- 10: Video game player
- 12: Personalized 3-D object file
- 14: Color image data
- 15: Display screen
- 16: Depth data
- 18: Keypoints data
- 20: Image capture device (electronic or film based)
- 30: Microphone
- 40: Game cartridge
- 50: CD writer
- 60: Disc
- 62: Black material
- 64: Black holes
- 65: Depth-to-reflectance converter
- 66: White pegs
- 70: Customer
- 72: Blue background
- 80: Depth signal generator
- 82: Connector spring
- 84: Flexible member
- 86A: Strain gauge
- 86B: Lead

## Claims

**1.** A digital recording media having recorded thereon a standard segment of data created from graphics and control information, a personalized segment including one or more images, and one or more associated files containing depth (distance) information.

**2.** Claim 1 where the recording media is an optical disc.

**3.** A method for creating a 3-D personalization template by identifying a standardized number of key points of a face or body and storing the locations of said key points in a digital database associated with an image of the face or body.

**4.** A video game incorporating the digital recording media of Claim 1.

**5.** A video game incorporating the 3-D personalization template of Claim 3.

**6.** An apparatus for providing depth data derived from a person or object comprising:
a depth-to-reflectance conversion means;
image capture means for recording the reflectance of said depth-to-reflective conversion means into reflective data; and
processor means for converting reflective data to depth data.

**13.** A method for producing a displacement image representing the depth of an object comprising the steps of:
a) establishing a plurality of displacement signals representing the surface of an object;
b) producing a displacement image of the surface of the object by combining said displacement signals.

**14.** The method according to Claim 13 and further comprising the steps of:
i) converting said displacement image into a digital image comprised of image pixel values; and
ii) converting at least one image pixel value into at least one depth value.

**15.** A method for forming a personalized video game utilizing a personalized 3-D object file generated by the steps of:
iii) incorporating the depth values formed according to Claim 14; and
iv) incorporating image data relating to the object of Claim 14.

**16.** A method for forming a personalized video game using a personalized 3-D object file generated by the steps of:
iii) incorporating the depth values formed according to Claim 14;
iv) incorporating image data relating to the object of Claim 14; and
v) incorporating key-points data corresponding to the position of selected points on the object.
